# EUROPÄISCHE PATENTSCHRIFT

(11) **EP 3 023 465 B1**
(45) Veröffentlichungstag und Bekanntmachung des Hinweises auf die Patenterteilung: **05.01.2022**
(21) Anmeldenummer: 15195268.6
(22) Anmeldetag: 19.11.2015
(51) Int. Cl.: C08G 18/66, C08G 18/73, C09D 133/14, C08G 18/10, C09D 167/02, C09D 175/04, C08J 3/03, C09D 161/28, C09J 161/28, C08G 18/08, C09D 175/06, C08G 18/34, C08G 18/42, C09J 133/14, C09J 167/02, C09J 175/06, C08L 61/28, C08L 67/02, C08L 75/06, C08L 33/14

(54) **VERFAHREN ZUR HERSTELLUNG EINER WÄSSRIGEN POLYMER/MELAMIN-DISPERSION UND DEREN VERWENDUNG**
METHOD FOR THE PREPARATION OF AN AQUEOUS POLYMER/MELAMINE DISPERSION AND ITS USE
PROCEDE DE FABRICATION D'UNE DISPERSION POLYMERE/MELAMINE ET SON UTILISATION

(30) Priorität: 19.11.2014 DE 102014116960
(43) Veröffentlichungstag der Anmeldung: 25.05.2016
(73) Patentinhaber: SYNTHOPOL CHEMIE Dr. rer. pol. Koch GmbH & CO. KG, 21614 Buxtehude (DE)
(72) Erfinder: Simon, Rolf, 21614 Buxtehude (DE)
(74) Vertreter: Müller Schupfner & Partner Patent- und Rechtsanwaltspartnerschaft mbB

(56) Entgegenhaltungen:
- EP-A1- 0 579 193
- DE-A1- 2 054 468
- DE-A1- 2 503 389
- DE-A1-102005 050 821
- GB-A- 2 421 733
- US-A1- 2005 065 277

## Beschreibung

Die vorliegende Erfindung betrifft wässrige Dispersionen von Polymeren mit Carboxyl-Gruppen mit Melamin-Verbindungen und nach dem Verfahren hergestellte wässrige Polymer/Melamin-Dispersionen, sowie deren Verwendung in Beschichtungsmitteln oder als Klebstoffe.

Dispersionen von Polymeren mit Carboxyl-Gruppen und Melamin-Verbindungen sind bekannt. Die EP 1518871 A2 offenbart Dispersionen enthaltend Harze, die Hydroxylgruppen aufweisen und durch teilweise neutralisierte Säuregruppen hydrophilisiert sind, und veretherte Aminoplaste als Härter. Das Harz wirkt als Emulgator für das Aminoplastharz im Wasser, wobei in der Dispersion Harz und Härter in der dispergierten Phase vorliegen. Es wurde jetzt gefunden, dass nach diesem Verfahren Harz und Härter in der dispergierten Phase vorliegen, aber in unterschiedlichen Domänen, d.h. getrennt voneinander in unterschiedlichen Tröpfchen. Erst wenn das Wasser verdunstet ist, erfolgt eine homogene Durchmischung, aber da ist der Lack bereits appliziert und eine mechanische Durchmischung durch fremd eingebrachte Scherkräfte ist nicht mehr möglich. Es bilden sich somit Bereiche aus, die wunschgemäß vernetzt sind, neben Bereichen, die über- und auch deutlich untervernetzt sind. Diese Inhomogenität ist dann eine Schwachstelle, sowohl in der Chemikalienbeständigkeit, wie auch in der mechanischen Festigkeit. Mit dem Entfernen des Wassers geht eine Erhöhung der Viskosität einher, so dass die Domänen nicht vollständig aufgelöst werden und nicht für eine vollständige Durchmischung von Härter und Harz Sorge getragen werden kann.

Die vorliegende Erfindung hat es sich zur Aufgabe gemacht, diese und andere Nachteile auszuräumen und ein Verfahren bereitzustellen, wonach Dispersionen herstellbar werden, in denen Polymer bzw. Harz und Härter bereits in der dispersen Phase homogen gemischt vorliegen. Nach dem erfindungsgemäßen Verfahren liegt schon vor der Wärmehärtung eine homogene Bindemittelverteilung in jedem Tröpfchen vor, wie es bei lösemittelgelösten Lacken auch der Fall ist, weil diese schon in der organischen Phase bei erhöhter Temperatur gemischt werden und dann erst in das Wasser eingebracht werden.

Die vorliegende Erfindung ist durch den Gegenstand der unabhängigen Ansprüche beschrieben. Bevorzugte Ausführungsformen sind Gegenstand der Unteransprüche oder nachfolgend beschrieben.

Das Harz kann wie folgt beschrieben werden:
Die Polymer/Melamin-Dispersion umfasst in Bezug auf den Festkörperanteil
- zu größer 50 Gew.-% bis 80 Gew.-%, bevorzugt zu mindestens 60 Gew.-% bis 80 Gew.% und insbesondere bevorzugt zu mindestens 65 Gew.-% bis 80 Gew.-% ein oder mehrere der in Anspruch 1 genannten Polymere und
- zu 20 Gew.% bis kleiner 50 Gew.-%,bevorzugt zu kleiner 35 Gew.-% bis 20 Gew.-% Melamin-Verbindungen gemäß Anspruch 1. Die Bestimmung des Festkörperanteils erfolgt nach DIN 53219.

Als Melamin-Verbindungen werden eingesetzt die Umsetzungsprodukte von Formaldehyd mit Melamin (2,4,6-Triamino-1,3,5-triazin) oder Benzoguanamin, Acetoguanamin und Bisguanamine wie Adipo-, Glutaro- oder Methylglutarobisguanamin und Spiroguanamine. Die Melamin-Verbindungen sind zumindest teilweise methyloliert und/oder verethert.

Bevorzugt sind zumindest teilweise mit Formaldehyd methyloliertes und verethertes Melamin und entsprechende Verbindungen, welche mehrere Melaminkerne, z.B. 2 bis 5 über Methylolgruppen (-CH₃-O-CH₃-) verbrückte Melamine, enthalten, oder deren Gemische. Die Melamin-Verbindungen sind im Mittel mit mindestens 1 Mol Formaldehyd pro Mol primärer Aminogruppen am Aminotriazinkern methyloliert.

Die Melamin-Verbindungen sind im Mittel mit mindestens 1 Mol, vorzugsweise mindestens 1,4 Mol Formaldehyd pro Mol primärer Aminogruppen am Aminotriazinkern methyloliert und diese Methylolgruppen sind vorzugsweise ihrerseits im Mittel mit mindestens 0,5 Mol, vorzugsweise mindestens 0,8 Mol und besonders bevorzugt mit mindestens 0,7 Mol primären Alkoholen pro Mol Methylolgruppe verethert. Bevorzugte primäre Alkohole sind insbesondere Alkanole, vorzugsweise C1- bis C4-Alkanole. Besonders bevorzugt ist Methanol.

Die DE 2503389 A1, GB 2421733 A, DE102005050821 A1 und die DE 2054468 A1 offenbaren Zusammensetzungen enthaltend ein Basispolymer und ein Melamin-Harz, jedoch keine Dispersionen, in denen die Basispolymere und die Melamin-Harze die disperse Phase bilden und jeweils in den Tröpfchen vereint vorliegen ohne miteinander reagiert zu haben. EP0579193 A1 offenbart Melamin-/Acrylatharz-Mischungen.

Geeignete Melaminverbindung sind z.B.:
- Hexamethoxymethylolmelamin wobei jede Aminogruppe des Melamin mit im Mittel 1,5 bis 2,5 Formaldehydgruppen methyloliert ist und jede Methylolgruppe mit Methanol verethert ist; und/oder
- Tetramethoxymethylolmelamin wobei die drei Aminogruppen des Melamin mit im Mittel 3,5 bis 4,5 Formaldehydgruppen methyloliert sind und jede Methylolgruppe mit Methanol verethert ist (im Mittel pro Molekül 3,5 bis 4,5 mal mit Methanol verethert).

Die Melamin-Verbindungen werden nach einer Ausführungsform ohne Lösungsmittel (auch ohne Wasser) oder nach einer anderen Ausführungsform in Form ihrer wässrigen und/oder alkoholischen (einschließlich wässrig-alkoholischen) Lösungen eingesetzt, wobei der Wasseranteil kleiner gleich 20 Gew.%, und besonders bevorzugt weniger als 10 Gew.% beträgt. Die Viskosität der Lösungen der Melamin-Verbindungen beträgt vorzugsweise 3000 bis 7000 mPas (bei 23°C). Die Lösungen der Melamin-Verbindungen sind als 70 bis 95% Lösungen kommerziell verfügbar und werden z.B. von der Firma INEOS unter dem Produktnamen MAPRENAL^{®} und RESIMENE^{®} angeboten.

Die Herstellung der Dispersionen erfolgt im Einzelnen wie folgt:
- Aus den Melamin-Verbindungen werden durch Umsetzung mit Formaldehyd die Umsetzungsprodukte B, wobei ggf. weiter mit kurzkettigen Mono-Alkoholen mit 1 bis 4 Kohlenstoffatomen verethert wird, einschließlich deren Kondensationsprodukte von im Mittel größer 1 bis 3 Einheiten (Umsetzungsprodukte B);
- Zusammenbringen des zumindest teilneutralisierten Polymers A, der Umsetzungsprodukte B und Wasser (dies ist vorzugsweise ausschließlich das in A und/oder B (insbesondere B) enthaltene Wasser in nachgenannten Grenzen und weniger bevorzugt eine innerhalb der Grenzen ggf. teilweise zugesetzte Menge Wasser, dann vorzugsweise erst Polymer A und Umsetzungsprodukte B, ggf. unter Vermischen, und erst danach Wasser), ggf. in Gegenwart eines Emulgators, unter Vermischung unter Erhalt einer Emulsion mit einem pH größer 7,5,
- wobei das Umsetzungsprodukt B kein Wasser oder maximal bis zu 20 Gew.% Wasser enthält (in einer Ausführungsform aber mehr als 0 Gew.% Wasser), und
das zumindest teilneutralisierte Polymer A weniger als 5 Gew.% Wasser (in einer Ausführungsform aber mehr als 0 Gew.% Wasser) enthält,
das zumindest teilneutralisierte Polymer A und das Umsetzungsprodukt B bei einer Temperatur von 40 bis 95°C, insbesondere 55 bis 80°C, durchmischt werden und erst danach zur Herstellung einer Dispersion mit Wasser als disperser Phase gemeinsam in Wasser eingebracht werden oder dem Gemisch danach Wasser zugegeben wird (jetzt ggf. in substantiellen Mengen, so dass die Dispersion bzw. das Gemisch z.B. 80 bis 30 Gew.% Wasser, vorzugsweise 65 bis 50 Gew.% Wasser enthält),
- wobei die Emulsion
   i) für weniger als 1 h, vorzugsweise weniger als 30 min, bei einer Temperatur von größer 80°C,
   ii) vorzugsweise für weniger als 1,5 h , vorzugsweise weniger als 60 min, bei einer Temperatur von größer 70°C und
   iii) vorzugsweise für weniger als 2 h, vorzugsweise weniger als 1h, bei einer Temperatur von größer 60°C gehalten wird (wobei die Bedingungen i) und ii) bzw. i) bis iii) vorzugsweise kumulativ gelten).

Als Polymere werden eingesetzt zumindest ein teilneutralisiertes Polymer A enthaltend freie Carbonsäure-Gruppen, einschließlich deren Salzen, mit einer Molmasse von im Gewichtsmittel größer 500 g/mol, vorzugsweise größer 1000 g/mol, ausgewählt aus einem oder mehreren Mitgliedern der Gruppe: (a1) zumindest teilneutralisierte Polyurethane, (a2) zumindest teilneutralisierte Alkydharze, und (a3) zumindest teilneutralisierte Polyester.

Als Polymere sind weiterhin Polyurethane geeignet. Diese sind als Umsetzungsprodukte von Alkoholen mit mindestens zwei Hydroxy- Gruppen mit Isocyanaten mit mindestens zwei Isocyanatgruppen erhältlich. Als Alkohole können ein oder mehrere Alkohole A, ein oder mehrere Alkohole B oder ein oder mehrere Alkohole C nebst deren Mischungen eingesetzt werden.

Der Alkohol A ist nach einer Alternative im Mittel vorzugsweise 1,9 bis 3 wertig. Vorzugsweise werden zwei- oder dreiwertige Alkohole oder deren Mischungen eingesetzt und weiter bevorzugt sind 90 mol% aller Alkohole A zweiwertig. Der Alkohol A kann durch Homo- oder Copolymerisation von Ethylenoxid, Propylenoxid, Butylenoxid, Tetrahydrofuran, Styroloxid oder Epichlorhydrin oder durch Anlagerung mindestens einer dieser Verbindungen, gegebenenfalls im Gemisch oder nacheinander, an Startkomponenten mit reaktionsfähigen Wasserstoffatomen erhältlich sein. Typische Startverbindungen sind kurzkettige Diole mit 2 bis 6 Kohlenstoffatomen.

Weiterhin sind Polyesterpolyole als Alkohol A geeignet. Das Polyesterpolyol ist durch Umsetzung von zweiwertigem Alkohol mit zweiwertiger aliphatischer, cycloaliphatischer, arylaliphatischer oder aromatischer Carbonsäure und/oder dem entsprechenden Carbonsäureanhydrid erhältlich, wobei der mehrwertige Alkohol vorzugsweise Ethylenglykol, Propan-1,2-diol, Propan-1,3-diol, Butan-1,4-diol, 1,6-Hexandiol, Neopentylglykol, Trimethylolpropandiol, 1,4-Cyclohexyldimethanol, 2-Methylpropan-1,3-diol, ein Methylpentandiol, Diethylenglykol, Triethylenglykol, Polyethylenglykol, Polypropylenglykol, Dipropylenglykol, Dibutylenglykol oder eine Mischung davon ist, und die Carbonsäure oder das Carbonsäureanhydrid vorzugsweise Phthalsäure, Pthalsäureanhydrid, Isopthalsäure, Tetra- oder Hexahydrophthalsäureanhydrid, Cyclohexyldicarbonsäure, Maleinsäure, Maleinsäureanhydrid, Fumarsäure, dimere Fettsäure, aliphatische, lineare Dicarbonsäure mit einer Kohlenstoffanzahl von 2 bis 20 oder eine Mischung davon ist.

Eine weitere Alternative für den Alkohol A ist ein Polyacrylatpolyol oder ein Polyacrylatpolyol in Form eines Acrylatharzes, das durch Einbau von hydroxylfunktionellem Acrylatmonomer, wie zum Beispiel Hydroxylethylacrylat oder Hydroxylmethylacrylat erhältlich ist, und 20 bis 250 Hydroxylgruppen besitzt. Nach einer weiteren Alternative ist der Alkohol A ein Polycaprolactondiol, wobei das Polycaprolactondiol z.B. aus ε-Caprolacton, β-Propiolacton, γ-Butyrolacton und/oder Methyl-ε-caprolacton oder einer Mischung davon erhältlich ist.

Der Alkohol B ist eine Verbindung, die mindestens zwei Hydroxyl- und eine Carboxylgruppe enthält, und vorzugsweise Dimethylolpropionsäure oder Dimethylolbutansäure, insbesondere Dimethylolpropionsäure ist.

Der Alkohol C ist ein Alkohol, der mindestens 2 primäre oder sekundäre Hydroxylgruppen enthält, wobei vorzugsweise mindestens 30%, vorzugsweise mindestens 50%, besonders bevorzugt mindestens 80%, der Alkohole C pro Molekül 3 und mehr Hydroxylgruppen aufweisen. Der Alkohol C ist insbesondere Glycerin, Pentaerythrit, Trimethylolpropan und/oder (partiell) alkoxylierte, insbesondere (partiell) ethoxylierte, Polyalkohole mit mindestens zwei Hydroxylgruppen.

Bevorzugt werden die Alkohole A und Alkohole B in einem Gewichtsverhältnis von 10 : 1 bis 2 : 1 eingesetzt, sowie fakultativ Alkohol A und der Alkohol C in einem Gewichtsverhältnis von 50 : 1 bis 2:1, und/oder fakultativ Alkohol B und der Alkohol C in einem Gewichtsverhältnis von 2 : 1 bis 0,5 : 1.

Die eingesetzten Isocyanate A, Isocyanate B und/oder Isocyanate C sind, gleich oder verschieden, wie z.B. Diisocyanate eines aromatischen Kohlenwasserstoffs mit 6 bis 15 Kohlenstoffatomen, Diisocyanate eines aliphatischen Kohlenwasserstoffs mit 4 bis 15 Kohlenstoffatomen, und/oder Diisocyanate eines cycloaliphatischen Kohlenwasserstoffs mit 6 bis 15 Kohlenstoffatomen .

Vorzugsweise werden als Isocyanate A Diisocyanate eines cycloaliphatischen Kohlenwasserstoffs mit 6 bis 15 Kohlenstoffatomen eingesetzt.

Die Umsetzung der Alkohole A bis C jeweils mit den Isocyanaten A bis C (A mit A, B mit B und C mit C) erfolgt vorzugsweise in Gegenwart eines Metall-Katalysators, wobei zinn-, titan-, wolfram- oder bismuth-haltige Katalysatoren bzw. deren Mischungen bevorzugt sind. Genannt seien exemplarisch Dibutylzinndilaurat, Dibutylzinnsäure und/oder Dibutylzinnoxid. Vorzugsweise wird der Katalysator bzw. die Katalysator-Mischung nur in Schritt A zugesetzt.

Die Zusammensetzungen A, B oder C können 10 bis 70 Gew.-% Lösungsmittel enthalten. Vorzugsweise enthalten diese weniger als 15 Gew.% Lösungsmittel. Als Lösungsmittel seien genannt Methoxyhexanon, Methylethylketon, Methylisobutylketon, Aceton oder eine Mischung davon, vorzugsweise Methylethylketon und/oder Aceton, insbesondere Methylethylketon.

Die Umsetzung der Alkohol und Isocyanate kann bei Reaktionstemperaturen von 30 bis 140 °C, vorzugsweise bei 60 bis 90 °C, insbesondere bei 60 bis 80 °C, erfolgen.

Als Polyurethane sind besonders geeignet Polyurethane mit Kern Schale-Aufbau, insbesondere solche welche in der DE 102013108828 offenbart sind, die hiermit ausdrücklich auch zum Offenbarungsgehalt der vorliegenden Anmeldung gemacht wird.

Bei der Herstellung von Alkydharzen wird ein Polyol oder ein Polyol-Gemisch, vorzugsweise mit im Mittel größer 2 bis 6 Hydroxyl-Gruppen, insbesondere größer 2 bis 4 Hydroxylgruppen eingesetzt.

Zweiwertige Polyole sind vorzugsweise ausgewählt aus der Gruppe bestehend aus Ethylenglykol, Diethylenglykol, Propylenglykol, 1,4-Cyclohexandimethanol, und Neopentylglykol, wobei Neopentylglykol besonders bevorzugt ist. Dreiwertige Polyole sind vorzugsweise aus der Gruppe bestehend aus Glycerin und Trimethylolpropan ausgewählt. Als vierwertiges Polyol wird beispielsweise Di-Trimethylolpropan oder Pentaerythrit verwendet, vorzugsweise Pentaerythrit. Besonders bevorzugt wird als Polyol Neopentylglykol, Glycerin, Trimethylolpropan, Pentaerythrit oder eine Mischung davon eingesetzt.

Ferner sind als Polyol Dipentaerythrit, Kohlenhydrate bzw. deren Derivate einsetzbar, insbesondere in einem Gemisch mit anderen niederwertigeren Polyolen. Weiterhin ist es möglich, einen begrenzten Anteil von maximal 40 mol-% des Polyols bzw. des Polyol-Gemischs durch ein Epoxidharz zu ersetzen.

Als Polycarbonsäure-Verbindungen werden vorzugsweise Di- und/oder Tricarbonsäuren, Anhydride solcher Carbonsäuren, Ester solcher Carbonsäuren oder eine Mischung davon eingesetzt. Es werden besonders bevorzugt Dicarbonsäuren, Anhydride solcher Carbonsäuren, Ester solcher Carbonsäuren oder eine Mischung davon eingesetzt. Dabei wird insbesondere ortho-Phthalsäure, ortho-Phthalsäureanhydrid, Isophthalsäure, Terephthalsäure, Tetrahydro-Phthalsäureanhydrid, Hexahydrophthalsäureanhydrid oder eine Mischung davon eingesetzt. Als Tricarbonsäure-Verbindung ist Trimellitsäureanhydrid bevorzugt.

Als Alternative oder als Zusatz zur Di- bzw. Tricarbonsäure-Verbindungen können aber auch Tetracarbonsäure-Verbindungen eingesetzt werden.

Den eben genannten Carbonsäuren-Verbindungen unterschiedlicher Wertigkeit können weitere Dicarbonsäure-Verbindungen zugesetzt werden, insbesondere Maleinsäureanhydrid, Adipinsäure, Azelainsäure oder eine Mischung davon.

Ferner werden bei der Herstellung der Alkydharze vorzugsweise ein oder mehrere ungesättigte nicht cyclische aliphatische Monocarbonsäure-Verbindungen mit 5 bis 22 Kohlenstoffatomen im Säurerest eingesetzt. In der vorliegenden Offenbarung sind unter Monocarbonsäure-Verbindungen Monocarbonsäuren, deren Anhydrid, deren Ester oder Mischungen davon gemeint. Unter "Säurerest" einer Monocarbonsäure-Verbindung ist in der vorliegenden Erfindung (i) die eingesetzte Säure als solche gemeint, falls als Monocarbonsäure-Verbindung eine Monocarbonsäure eingesetzt wird, oder (ii) der davon abgeleitete Baustein, falls als Monocarbonsäure-Verbindung ein Anhydrid oder Ester einer Monocarbonsäure eingesetzt wird. Demzufolge werden vorzugsweise ein oder mehrere ungesättigte Fettsäuren, deren Anhydride, deren Ester oder Mischungen davon eingesetzt.

Bei der Herstellung der Alkydharze können weitere Verbindungen eingesetzt werden. Insbesondere können ein oder mehrere gesättigte nicht cyclische aliphatische Monocarbonsäure-Verbindungen mit 5 bis 22 Kohlenstoffatomen im Säurerest, d.h. gesättigte Fettsäuren bzw. deren Anhydride oder Ester, und/oder eine aromatische oder cycloaliphatische Monocarbonsäure-Verbindung, insbesondere Benzoesäure, oder Mischungen davon eingesetzt werden.

Als Fettsäuren werden insbesondere solche eingesetzt, die von pflanzlichen Ölen abgeleitet sind, d.h. insbesondere von Kastoröl, d.h. Rizinusöl, dehydratisiertem Kastoröl, Baumwollsaatöl. Rapsöl, Kokosnussöl, Leinsamenöl, Olivenöl, Palmöl, Erdnussöl, Diestelöl, Sojaöl, Sonnenblumenöl, Tallöl, Tungöl oder eine Mischung davon. Besonders bevorzugt werden Fettsäuremischungen eingesetzt, deren Anteile mit jenen des entsprechenden pflanzlichen Öls korrelieren. Von Sojaöl, Sonnenblumenöl, Tallöl und/oder Leinöl abgeleitete Fettsäuren sind besonders bevorzugt.

Dementsprechend werden als Fettsäure vorzugsweise Caprylsäure, Caprinsäure, Laurinsäure, Myristinsäure, Palmitinsäure, Stearinsäure, Ölsäure, Linolsäure, Linolensäure, Eleostearinsäure, Ricinolsäure, Arachinsäure oder eine Mischung davon eingesetzt.

Daneben können auch weitere gesättigte und/oder (mehrfach) ungesättigte Fettsäuren tierischen, synthetischen oder halbsynthetischen Ursprungs eingesetzt werden.

Als Fettsäureester werden vorzugsweise pflanzliche Öle eingesetzt, insbesondere eines der vorstehend genannten pflanzlichen Öle oder eine Mischung davon. Das heißt, dass insbesondere Kastoröl, d.h. Rizinusöl, dehydratisiertem Kastoröl, Baumwollsaatöl, Rapsöl, Kokosnussöl, Leinsamenöl, Olivenöl, Palmöl, Erdnussöl, Diestelöl, Sojaöl, Sonnenblumenöl, Tungöl oder eine Mischung davon eingesetzt wird, zum Beispiel Sojaöl, Sonnenblumenöl und/oder Leinöl.

Geeignete Polyester leiten sich ab von aliphatischen linearen, verzweigten oder cyclischen Polyhydroxyverbindungen, insbesondere Dihydroxyverbindungen, und aromatischen oder aliphatischen linearen, verzweigten oder cyclischen Polycarbonsäuren, insbesondere Dicarbonsäuren. Dabei sind die Dicarbonsäuren und die Dihydroxyverbindungen vorzugsweise teilweise ersetzt durch Hydroxycarbonsäuren, insbesondere durch aliphatische lineare und durch aromatische Hydroxycarbonsäuren wie Hydroxybuttersäure, Hydroxyvaleriansäure, Hydroxycapronsäure und Hydroxybenzoesäure. Dabei können jeweils bis zu 10 % der Masse der Hydroxyverbindungen und der Carbonsäuregruppen-haltigen Verbindungen drei oder mehr funktionelle Gruppen enthalten. Selbstverständlich ist es dabei möglich, dass Dihydroxyverbindungen mit einer zusätzlichen Säurefunktion oder Dicarbonsäuren mit einer zusätzlichen Hydroxylgruppe eingesetzt werden. Derartige Verbindungen sind beispielsweise Bishydroxymethylpropionsäure, Weinsäure und Dihydroxybenzöesäure.

### Beispiel 1 - Herstellung einer Melamin-Acrylatharz-Dispersion (Vergleichsbeispiel)

70 Gewichtsteile (bezogen auf den Feststoffanteil) eines im wesentlichen Wasserfreien in Butanol gelösten hydroxylgruppen-haltigen Acrylatharzes der Produktbezeichnung Synthalat^{®} A-JB 772 der Firma Synthopol (hergestellt aus Styrol, Methylmethacrylat, Acrylsäure und Glycidylester der Neodecansäure (Cardura E10) und Hydroxypropylmethacrylat) neutralisiert durch Dimethylethanolamin mit einem Feststoffgehalt von 83,5 Gew.% wurde bei 90°C vorgelegt und es wurden 30 Gewichtsteile (bezogen auf den Feststoffanteil) des tetra-methylierten Melaminformaldehydharzes Maprenal^{®} MF 921w 85WA der Firma INEOS vorliegend bei 40°C unter Rühren langsam zugegeben. Das methylierte Melaminformaldehydharzes hatte einen Feststoffgehalt von 85 Gew.% und lag in wässriger Lösung vor. Gegen Ende der Zugabe stellte sich eine Temperatur von 75°C ein, worauf Wasser (vorliegend bei Raumtemperatur) bis zur Einstellung eines Feststoffgehaltes von 41 Gew.% zugegeben wurde.

Es wurde eine Dispersion erhalten in der die disperse Phase eine homogene Mischung von Acrylat- und Melaminharz darstellt. Die Dispersion hatte eine Viskosität von 94 mPas (bei 23°C), eine Säurezahl von 23,0 g/mg KOH (Bezogen auf den Feststoff) und einen pH-Wert von 8,6. Die mittlere Teilchengröße (Volumenmittel) der Dispersion betrug 164 nm (Messgerät: Malvern):
Die Lagerstabilität ist nachweisbar über die Änderung des ph-Wertes und der Viskosität (in Tagen (T) von der Synthese gerechnet):

| | | |
|---|---|---|
| 2 T | pH-Wert 8,6 | Visk.(23°C) 85 |
| 23 T | pH-Wert 8,6 | Visk.(23°C) 86 |
| 155 T | pH-Wert 8,6 | Visk.(23°C) 140 |
| 200 T | pH-Wert 8,6 | Visk.(23°C) 184 |

Die eingesetzten Rohstoffe sind in der Abfolge Ihres Einsatzes auch in nachfolgender Tabelle zusammengestellt:

| **#** | **Rohstoff** | | | **Menge in g** | **% auf Fest** | **% auf Ges.** |
|---|---|---|---|---|---|---|
| 1 | N-BUTANOL | | | 94,48 | | 4,50% |
| 2 | CARDURA E10 | | | 168,18 | 18,93% | 8,01% |
| 3 | STYROL | | | 156,86 | 17,66% | 7,47% |
| 4 | METHYLMETHACRYLAT (MMA) | | | 94,14 | 10,60% | 4,48% |
| 5 | 2-HYDROXYPROPYLMETHACRYLAT | | | 131,81 | 14,84% | 6,28% |
| 6 | ACRYLSÄURE | | | 70,89 | 7,98% | 3,38% |
| 7 | DI-TERT.BUTYLPEROXID | | | 40,82 | 4,59% | 1,94% |
| 8 | N-BUTANOL | | | 0,00 | | 0,00% |
| 9 | N-BUTANOL | | | 0,00 | | 0,00% |
| 10 | DIMETHYLETHANOLAMIN (DMEA) | | | 28,33 | 3,19% | 1,35% |
| 11 | Maprenal MF 921w 85WA | | | 313,55 | 30,00% | 14,94% |
| 12 | DEST.WASSER | | | 1000,00 | | 47,64% |
| | | Masse Fest | 888,41 | | | |
| | | Masse Gesamt | 2099,06 | 70,00% | 100,00% | |
| | | Theo. FK: | 42,32 Gew. % | | | |

### Beispiel 2 - Herstellung einer Melamin-Acrylatharz-Dispersion (Vergleichsbeispiel)

70 Gewichtsteile (bezogen auf den Feststoffanteil) eines im wesentlichen Wasserfreien in Butanol gelösten hydroxylgruppen-haltigen Acrylatharzes der Produktbezeichnung Synthalat^{®} A JB 772 der Firma Synthopol (hergestellt aus Styrol, Methylmethacrylat, Acrylsäure und Glycidylester der Neodecansäure (Cardura E10) und Hydroxypropylmethacrylat) neutralisiert durch Dimethylethanolamin mit einem Feststoffgehalt von 83,5 Gew.% wurde bei 90°C vorgelegt und es wurden 30 Gewichtsteile (bezogen auf den Feststoffanteil) des hexamethylierten Melaminformaldehydharzes CYMEL^{®} 303 der Firma Allnex vorliegend bei 40°C unter Rühren langsam zugegeben. Das methylierte Melaminformaldehydharz hatte einen Feststoffgehalt von größer 98 Gew.%. Gegen Ende der Zugabe stellte sich eine Temperatur von 75°C ein, worauf Wasser (vorliegend bei Raumtemperatur) bis zur Einstellung eines Feststoffgehaltes von 43,1 Gew.% zugegeben wurde. Es wurde eine Dispersion erhalten, in der die disperse Phase eine homogene Mischung von Acrylat- und Melaminharz darstellt. Die Dispersion hatte eine Viskosität von 136 mPas (bei 23°C), eine Säurezahl von 21,5 g/mg KOH (Bezogen auf den Feststoff) und ein pH-Wert von 8,7. Die mittlere Teilchengröße (Volumenmittel) der Dispersion betrug 209 nm (Messgerät: Malvern).

Die Lagerstabilität ist nachweisbar über die Änderung des ph-Wertes und der Viskosität Viskosität (in Tagen (T) von der Synthese gerechnet): 19.09.2013):

| | | |
|---|---|---|
| 0 | pH-Wert 8,7 | Visk.(23°C) 126 |
| 20 T | pH-Wert 8,6 | Visk.(23°C) 127 |
| 152 T | pH-Wert 8,6 | Visk.(23°C) 98 |
| 197 T | pH-Wert 8,6 | Visk.(23°C) 90 |
| 364 T | pH-Wert 8,7 | Visk.(23°C) 88 |

Die eingesetzten Rohstoffe sind in der Abfolge Ihres Einsatzes auch in nachfolgender Tabelle zusammengestellt:

| **#** | **Rohstoff** | | **Menge in g** | **% auf Fest** | **% auf Ges.** |
|---|---|---|---|---|---|
| 1 | N-BUTANOL | | 94,48 | | 4,60% |
| 2 | CARDURA E10 | | 168,18 | 18,93% | 8,20% |
| 3 | STYROL | | 156,86 | 17,66% | 7,64% |
| 4 | METHYLMETHACRYLAT (MMA) | | 94,14 | 10,60% | 4,59% |
| 5 | 2-HYDROXYPROPYLMETHACRYLAT | | 131,81 | 14,84% | 6,42% |
| 6 | ACRYLSÄURE | | 70,89 | 7,98% | 3,45% |
| 7 | DI-TERT.BUTYLPEROXID | | 40,82 | 4,59% | 1,99% |
| 8 | DIMETHYLETHANOLAMIN (DMEA) | | 28,33 | 3,19% | 1,38% |
| 9 | Cymel 303 | | 266,52 | 30,00% | 12,99% |
| 10 | DEST.WASSER | | 1000,00 | | 48,73% |
| | | Masse Fest | 888,41 | | |
| | | Masse Gesamt | 2052,03 | 70,00% | 100,00% |
| | | Theo. FK | 43,29 Gew.% | | |

### Beispiel 3 - - Herstellung einer Melamin-Polyesterharz-Dispersion

75 Gewichtsteile (bezogen auf den Feststoffanteil) eines im wesentlichen Wasserfreien in Dowanol PnB (n-1-Butoxypropan-1-ol) gelösten hydroxylgruppen-haltigen Polyesters der Produktbezeichnung SYNTHOESTER^{®} W142 der Firma Synthopol (hergestellt aus Neopentylglykol, Trimethylolpropan, Cyclohexandimethanol, Hexahydro-Phtalsäureanhydrid, Adipinsäure, Trimellitsäureanhydrid) neutralisiert durch Dimethylethanolamin mit einem Feststoffgehalt von 81 Gew.% wurde bei 90°C vorgelegt und es wurden 25 Gewichtsteile (bezogen auf den Feststoffanteil) des tetra-methylierten Melaminformaldehydharzes Maprenal^{®} MF 921w 85WA vorliegend bei 40°C unter Rühren langsam zugegeben. Das Melaminformaldehydharze war in Wasser gelöst und hatte einen Feststoffgehalt von 85 Gew.%. Gegen Ende der Zugabe wurde eine Temperatur von 80°C eingestellt, worauf Wasser (vorliegend bei Raumtemperatur) bis zur Einstellung eines Feststoffgehaltes von 48 Gew.% zugegeben wurde.

Es wurde eine Dispersion erhalten in der die disperse Phase eine homogene Mischung von Acrylat- und Polyesterharz darstellt. Die Dispersion hatte eine Viskosität von 4440 mPas (bei 23°C Haake), eine Säurezahl von 36,8 g/mg KOH (Bezogen auf den Feststoff), eine OH-Zahl von 149 g/mg KOH) und ein pH-Wert von 8,2 (10 Teile Dispersion / 90 Teile Wasser). Die mittlere Teilchengröße der Dispersion betrug 55 nm.

Die eingesetzten Rohstoffe sind in der Abfolge Ihres Einsatzes auch in nachfolgender Tabelle zusammengestellt:

| **#** | **Rohstoff** | **Menge** | **#** | **Rohstoff** | **Menge** |
|---|---|---|---|---|---|
| 1 | NPG | 107 | 6 | TMA | 43 |
| 2 | TMP | 158 | 7 | PnB | 186 |
| 3 | CHDM | 126 | 8 | DMEA | 39 |
| 4 | HH - PSA | 199 | 9 | Maprenal MF 921 85% Wasser | 294 (250 fest) |
| 5 | Adipinsäure | 196 | 10 | Dem. Wasser | 680 |
| | Festeinwaage | 1078 | | Verlust - Muster | 9 |
| | Wasserverlust theoretisch | 69 | | Festausbeute | 1000 |

### Beispiel 4 - Herstellung einer Melamin-Alkydharz-Dispersion

Zur Herstellung des Alkydharzes wurden TMP, NPG, Sonnenblumenfettsäure "SB05", iso-Phtalsäure und Trimellitsäureanhydrid zwischen 180-240°C zu Reaktion gebracht und bei ca. 70°C mit Dimethylethanolamin neutralisiert und unter Wasser zugaben bis zu einem Feststoffgehalt von 42 Gew.% abgekühlt. Die Viskosität betrug 2960 mPas (bei 23°C, Haake), der pH-Wert 7,8.

Es wurde wie zur Herstellung des Alkydharzes beschrieben verfahren, jedoch vor Wasserzugabe bei 71°C das tetra-methylierte Melaminformaldehydharz Maprenal^{®} MF 921w 85WA vorliegend bei 40°C unter Rühren langsam zugegeben. Der Gewichtsverhältnis bezogen auf den Feststoff betrug 70 Gewichtsteile Alkydharz und 30 Gewichtsteile Melaminformaldehydharz. Der Feststoffgehalt nach Zugabe von Wasser betrug 39,6 Gew.%.

Die eingesetzten Rohstoffe sind in der Abfolge Ihres Einsatzes auch in nachfolgender Tabelle zusammengestellt:

| **#** | **Rohstoff** | **Menge [g]** |
|---|---|---|
| 1 | TMP | 119,4 |
| 2 | NPG | 67,9 |
| 3 | Sonnenblumenfettsäure "SB05" | 215,9 |
| 4 | iso-Phthalsäure | 180,8 |
| 5 | Unterphosphorige Säure | 0,7 |
| 6 | Fascat4100 | 0,13 |
| 7 | TMA | 59,8 |
| 8 | Butylglykol | 52,3 |
| 9 | sec-Butanol | 52,3 |
| 10 | DMEA | 50,0 |
| 11 | Maprenal MF 921 / 85% W | 296,5 |
| 12 | Wasser | 950,0 |
| 13 | DMEA | 10,0 |
| 14 | Wasser | 50,0 |
| | Einwaage fest | 882,0 |
| | Ausbeute fest | 840,0 |
| | Ausbeute ges. | 2000,0 |

### Beispiel 5 - Herstellung einer Melamin-PU-Harz-Dispersion

Eingesetzt wurde ein wasserfreier Polyester erhalten aus der Polykondensation von Phthalsäureanhydrid, Trimethylolpropan, Rizinusöl, Adipinsäure und Neopentylglykol mit einer Säurezahl von 1,4 mg/gKOH und einer OH-Zahl von 140. Die Viskosität Betrug 4000 mPas bei 100°C (Platte-Kegel, Spindel C).

Der Polyester wurde in der doppelten Menge Aceton und Dimethylolpropansäure aufgenommen und mit Dimethylisopropylamin versetzt und bei 65°C HDI zugegeben. Nachdem sich ein NCO-Gehalt von kleiner 5,8 Gew.% eingestellt hatte, wurde weiterer in Aceton gelöster Polyester zugegeben, gefolgt von der Zugabe von Dimethylolamin und Wasser. Das Aceton wurde abgestilliert.

Es wurde ein grobteilige milchige wässrige Polyurethan-Dispersion auf Polyesterbasis erhalten, die über 50 µm schlecht filtrierbar war und Rückstände aufwies. Der Feststoffanteil betrug 39,6 Gew.%, die Viskosität (Haake bei 20°C) 195 mPas. Die Teilchengröße betrug 247 nm und der pH-Wert 8,4.

Es wurde wie bei der Herstellung des Polyurethans verfahren, jedoch vor Wasserzugabe bei 68°C tetra-methyliertes Melaminformaldehydharz Maprenal^{®} MF 921w 85WA (vorliegend bei 20°C) zugegeben, wobei sich die Reaktionsmischung während der Zugabe auf ca. 30°C abgekühlt hat. Es wurde auf 44°C erhitzt und Wasser zugegeben bis wieder 20°C erreicht waren. Danach wurde bei 55°C unter leichtem Unterdruck Aceton ausgetrieben. Der Festgehalt betrug in der Folge 39,6 Gew.%. Die Viskosität betrug 140 mPas (Haake), der pH-Wert 8,0 und die Teilchengröße 300 nm.

Die eingesetzten Rohstoffe sind in der Abfolge Ihres Einsatzes auch in nachfolgender Tabelle zusammengestellt:

**Polyester-Vorprodukt:**

| **#** | **H₂O** | **Rohstoffe** | | **Menge** |
|---|---|---|---|---|
| 1 | 12,2% | PSA | | 399,60 |
| 2 | | TMP | | 164,50 |
| 3 | 6,0% | Ricinusöl | | 89,30 |
| 4 | 24,6% | Adipinsäure | | 338,50 |
| 5 | | hypophoshorige Säure | | 0,10 |
| 6 | | NPG | | 508,00 |
| theo. FK | | | 100,0% | |
| Einwaage | | | 1500,0 | |
| Reaktionswasser | | | 137,4 | |
| Gesamtmenge | | | 1362,6 | |

**Isocyanat-verknüpfter Polyester:**

| **#** | **Eq** | **Rohstoffe** | | **Menge** |
|---|---|---|---|---|
| 1 | 0,157 | VP PH 1129 | | 18,10 |
| 2 | 0,313 | DMPA | | 6,10 |
| 3 | | Aceton | | 54,70 |
| 4 | | Dimethylisopropylamin/70% | | 6,00 |
| 5 | 1,000 | HDI | | 24,20 |
| 6 | 2,200 | VP PH 1129 | | 253,10 |
| 7 | | Aceton | | 154,70 |
| 8 | | DMEA | | 2,20 |
| 9 | | Maprenal MF 921 | | 118,10 |
| 10 | | Dest. Wasser | | 570,00 |
| 11 | | Mergal K9N | | 0,90 |
| theo. FK | | | 40,0% | |
| Einwaage Lösungsmittel | | | 601,73 | |
| Einwaage, fest | | | 401,89 | |
| Gesamtmenge | | | 1003,61 | |

Es wurden Lacke gemäß Tabelle "Rezepturen der Lacke" hergestellt und in Form von zwei Wertepaaren nämlich Vergleich und Erfindung gegenübergestellt. Der erfindungsgemäß hergestellte Lack zeichnet sich durch eine bessere Haftung und bessere Chemikalien-Beständigkeit aus. Die Eigenschaften der Lacke sind im Einzelnen in der Tabelle "Eigenschaften der Lacke" dargestellt.

Die Lacke können nach üblichen Verfahren appliziert werden wie Streichen, Rollen, Spritzen, Tauchen, Gießen oder Fluten

Die erfindungsgemäßen Dispersionen können auch als Klebstoffe eingesetzt werden, z.B. als Beschichtung auf Klebebändern, etwa in der Automobilindustrie zum Umwickeln eines Kabelbaums, überall dort wo eine Wärmebestrahlung, angewandt werden kann oder als heißhärtender Klebstoff für eine Beflockung.

**Tabelle Rezepturen der Lacke (Seite 1)**

| | | A | B | C | D | E | F | G | H |
|---|---|---|---|---|---|---|---|---|---|
| | | Vergleich mit Beispiel 3 | Beispiel 3 | Vergleich mit Beispiel 1 | Beispiel 1^{∗} | Vergleich mit Beispiel 4 | Beispiel 4 | Vergleich mit Beispiele 5 | Beispiel 5 |
| demin. Wasser | | 8,0 | 8,0 | 8,0 | 8,0 | 8,0 | 8,0 | 8,0 | 8,0 |
| DMEA | | 0,2 | 0,2 | 0,2 | 0,2 | 0,2 | 0,2 | 0,2 | 0,2 |
| Lackadditive nämlich: | | 5,7 | 5,7 | 5,7 | 5,7 | 5,7 | 5,7 | 5,7 | 5,7 |
| | Surfinol AD 01 | 1,0 | 1,0 | 1,0 | 1,0 | 1,0 | 1,0 | 1,0 | 1,0 |
| | Disperbyk 2010 | 1,0 | 1,0 | 1,0 | 1,0 | 1,0 | 1,0 | 1,0 | 1,0 |
| | Byk 349 | 0,5 | 0,5 | 0,5 | 0,5 | 0,5 | 0,5 | 0,5 | 0,5 |
| | Bvketol AQ | 2,0 | 2,0 | 2,0 | 2,0 | 2,0 | 2,0 | 2,0 | 2,0 |
| | Byk 1710 | 1,2 | 1,2 | 1,2 | 1,2 | 1,2 | 1,2 | 1,2 | 1,2 |
| Ti02 2390 | | 20,0 | 20,0 | 20,0 | 20,0 | 20,0 | 20,0 | 20,0 | 20,0 |
| Talkum AT1 | | 1,0 | 1,0 | 1,0 | 1,0 | 1,0 | 1,0 | 1,0 | 1,0 |
| Aerosil R 972 | | 0,1 | 0,1 | 0,1 | 0,1 | 0,1 | 0,1 | 0,1 | 0,1 |
| 20'mit Glasperlen dispergieren | | | | | | | 0 | | |

| | | | | | | | | | |
|---|---|---|---|---|---|---|---|---|---|
| ^{∗}Der Gegenstand des Beispiels 1 ist nicht mehr beansprucht Fortsetzung nächste Seite | | | | | | | | | |

**Tabelle Rezepturen der Lacke (Seite 2)**

| | A | B | C | D | E | F | G | H |
|---|---|---|---|---|---|---|---|---|
| Coatex Rheo 2000 | 0,5 | 0,5 | 0,5 | 0,5 | 0,5 | 0,5 | 0,5 | 0 |
| Colöser | 5,0 | 5,0 | 5,0 | 5,0 | 5,0 | 5,0 | 5,0 | 5,0 |
| Dowanol DPnB | 2,0 | 2,0 | 2,0 | 2,0 | 2,0 | 2,0 | 2,0 | 2,0 |
| BDG | 3,0 | 3,0 | 3,0 | 3,0 | 3,0 | 3,0 | 3,0 | 3,0 |
| demin.Wasser | 18,53 | 12,0 | 9,93 | 2,5 | 0,5 | 0,5 | 8,2 | 1,0 |
| DMEA | 0,5 | 0,5 | 0,3 | 0,3 | 0,3 | 0,3 | 0,3 | 0,3 |
| Synthalat W 142 (50% Festkörper ) | 33,84 =16,92fes t | | | | | | | |
| Synthalat W-TH 2059 (48% Festkörper) (inkl. Melaminharz Maprenal MF 921) | | 47,0 =22,56fes t | | | | | | |
| Synthalat JB 772 (~40%) | | | 41,0 = 16,4 fest | | | | | |
| Synthalat BW 2552 (41,3%FK)(inkl. Melaminharz Maprenal MF 921) | | | | 56,7 =23,42 fest | | | | |
| Synthalat Q 3657 (42,0% FK) | | | | | 39,2 | | | |
| Synthalat Q 3667 (39,6% FK)(inkl. Melaminharz Maprenal MF 921) | | | | | | 58,7 | | |
| Liopur PFL 3175 (39,6% FK) | | | | | | | 44,1 | |
| Liopur PFL 3179 (39,6%FK)(inkl. Melaminharz Maprenal MF 921) | | | | | | | | 58,7 |
| Maprenal MF 921 (85% FK) (nachträglich) | 6,63 =5,64 fest | | 8,0 | | 8,3 | | 6,9 | |
| | 100,0 | 100,0 | 100,0 | 100,0 | 100,0 | 100,0 | 100,0 | 100,0 |
| Anteil BM / Melamin fest | 75/25 | 75/25 | 70/30 | 70/30 | 70/30 | 70/30 | 75/25 | 75/25 |

**Tabelle Eigenschaften der Lacke**

| | A | B | C | D | E | F | G | H |
|---|---|---|---|---|---|---|---|---|
| Bespiel | Synthalat W 142 | Synthalat W-TH 2059 | Synthalat JB 772 | Synthalat BW 2552 | Synthalat Q 3657 | Synthalat Q 3667 | Liopur PFL 3175 | Liopur PFL 3179 |
| pH-Wert | 8,2 | 9,4 | 9,1 | 9,5 | 8,9 | 9,3 | 9,6 | 9,6 |
| Viskosität mit x% demin.Wasser auf -30 Auslaufsekunden, gemessen im 4mm Becher nach DIN 53211 (20°C)einstellen | 20 | 40 | 10 | 14 | - | 10 | 33 | 13 |
| Viskosität direkt nach Wasserzugabe in Sekunden | 33 | 30 | 23 | 29 | 25 | 25 | 28 | 26 |
| Viskosität nach 1Tag | 437 | 33 | 23 | 31 | 25 | 25 | 24 | 20 |
| Viskosität nach 1Woche | 39 | 45 | 22 | 32 | 25 | 23 | 21 | 18 |
| Viskosität nach 1Monat | 56 | 57 | 29 | 36 | 26 | 23 | 20 | 23 |
| | | | | | | | | |
| 150µm Naßaufzug auf Glasplatte, 10'RT, 10'80°C, 30'160°C, 30'RT | | | | | | | | |
| Pendeldämpfungsprüfung nach König, gemäß DIN 53157 in Sekunden | 161 | 157 | 180 | 185 | 131 | 135 | 93 | 79 |
| Glanzmessung gemäß DIN 67530, Einheiten bei 60°Reflektometerwert | 64 | 38 | 84 | 73 | 53 | 77 | 17 | 66 |
| Beständigkeiten gegen 10x reiben mit Ethanol (96%) getränktem Tuch | i.O. | i.O. | i.O. | i.O. | i.O. | i.O. | i.O. | i.O. |
| Beständigkeiten gegen 10x reiben mit Xylol getränktem Tuch | i.O. | i.O. | i.O. | i.O. | i.O. | i.O. | i.O. | i.O. |

**Tabelle Eigenschaften der Lacke (Seite 2)**

| | A | B | C | D | E | F | G | H |
|---|---|---|---|---|---|---|---|---|
| 150µm Naßaufzug auf Stahlblech, 10'RT, 10'80°C, 30'160°C, 30'RT | | | | | | | | |
| Pendeldämpfungsprüfung nach König, gemäß DIN 53157 in Sekunden | 142 | 137 | 178 | 175 | 128 | 131 | 85 | 75 |
| Glanzmessung gemäß DIN 67530, Einheiten bei 60°Reflektometerwert | 59 | 31 | 82 | 74 | 54 | 67 | 16 | 54 |
| Erichsen-Tiefung gemäß DIN 1520 | 2,5 | 4,4 | 0,5 | 1,4 | 1,6 | 1,7 | 7,9 | 7,5 |
| | | | | | | | | |
| Aufguss auf Stahlblech, 30'RT, 30'160°C, bei 20µm TSD geprüft | | | | | | | | |
| Pendeldämpfungsprüfung nach König, gemäß DIN 53157 in Sekunden | 137 | 134 | 180 | 168 | 130 | 154 | 83 | 83 |
| Glanzmessung gemäß DIN 67530, Einheiten bei 60°Reflektometerwert | 34 | 20 | 79 | 62 | 19 | 53 | 20 | 42 |
| Erichsen-Tiefung gemäß DIN 1520 | 3,2 | 4,5 | 1,2 | 1,7 | 2,4 | 2,9 | 7,0 | 7,7 |
| Kratzhaftung gemäß Daimler-Benz | Kl | Kl | K3 | Kl | Kl | Kl | K3 | Kl |
| Gitterschnittprüfung + Tesaabriss gemäß DIN 53151 | 1 | 0 | 3 | 2-3 | 1 | 1 | 1 | 1 |

| | | | | | | | | |
|---|---|---|---|---|---|---|---|---|
| Bewertung: Kratzhaftung nach Daimer-Benz: K0 = sehr gut, K5 = sehr schlecht Gitterschnitt: 0 = sehr gut, 5 = sehr schlecht Erichsentiefung: kleiner Wert = schlecht, großer Wert = gut (das Blech reisst bei ca. 10mm) | | | | | | | | |

## Patentansprüche

1. Verfahren zur Herstellung einer wässrigen Polymer/Melamin-Dispersion, umfassend die Schritte
(a) Bereitstellen eines zumindest teilneutralisierten Polymers A enthaltend freie Carbonsäure-Gruppen, einschließlich deren Salzen, mit einer Molmasse von im Gewichtsmittel größer 500 g/mol ausgewählt aus einem oder mehreren Mitgliedern der Gruppe:
(a1) zumindest teilneutralisierte Polyurethane,
(a2) zumindest teilneutralisierte Alkydharze, und
(a3) zumindest teilneutralisierte Polyester;
(b) Bereitstellen von Melamin-Verbindungen als Umsetzungsprodukte B, wobei die Umsetzungsprodukte ggf. weiter zumindest teilweise mit kurzkettigen Mono-Alkoholen mit 1 bis 4 Kohlenstoffatomen verethert sind, einschließlich deren Kondensationsprodukte von im Mittel größer 1 bis 3 Einheiten, wobei als Melamin-Verbindungen die Umsetzungsprodukte von Formaldehyd mit Melamin, Benzoguanamin, Acetoguanamin und/oder Bisguanaminen eingesetzt werden und wobei die Melamin-Verbindungen im Mittel mit mindestens 1 Mol Formaldehyd pro Mol primärer Aminogruppen am Aminotriazinkern methyloliert sind;
(c) Zusammenbringen zumindest des zumindest teilneutralisierten Polymers A, des Umsetzungsproduktes B und Wassers, ggf. in Gegenwart eines Emulgators, unter Vermischung unter Erhalt einer Emulsion mit einem pH größer 7,5,
wobei das Umsetzungsprodukt B kein Wasser oder maximal bis zu 20 Gew.% Wasser enthält, und
das zumindest teilneutralisierte Polymer A weniger als 5 Gew.% Wasser enthält,
das zumindest teilneutralisierte Polymer A und das Umsetzungsprodukt B bei einer Temperatur von 40 bis 95°C durchmischt werden und danach zur Herstellung einer Dispersion mit Wasser als disperse Phase gemeinsam in Wasser eingebracht werden oder dem Gemisch danach Wasser zugegeben wird,
wobei die Emulsion für weniger als 1 h bei einer Temperatur von größer 80°C gehalten wird,
wobei die Dispersion 20 bis kleiner 50 Gew.% das Umsetzungsprodukt B und größer 50 Gew% bis 80 Gew.% das Polymer A, bezogen auf den Festkörperanteil enthält.

2. Verfahren nach Anspruch 1, wobei das zumindest teilneutralisierte Polymer A im Wesentlichen wasserfrei ist mit kleiner 2 Gew.% Wasser, vorzugsweise kleiner 0,5 Gew.%.

3. Verfahren nach Anspruch 1 oder 2, wobei dem Polymer zur (Teil)Neutralisation ein Amin, vorzugsweise ein Alkanolamin, zugesetzt ist, und die Teilneutralisation größer 50%, besonders bevorzugt größer 70% aller Säuregruppen neutralisiert, wobei wenn das Polymer A ein teilneutralisiertes Polyurethan ist, tertiäre Amine ohne freie Hydroxygruppen eingesetzt werden.

4. Verfahren nach zumindest einem der vorhergehenden Ansprüche, wobei das zumindest teilneutralisierte Polymer A ausgehend von einer Temperatur von größer 80°C dem Mischen ausgesetzt wird und sich durch das Mischen spätestens innerhalb von 30 min eine Temperatur der Mischung unter 80°C einstellt.

5. Verfahren nach Anspruch 1 oder 4, wobei die erhöhte Temperatur des Polymers A, die unmittelbar bei der Herstellung des Polymers A sich ergebende Temperatur ist, ggf. nach einer Abkühlung.

6. Verfahren nach zumindest einem der vorhergehenden Ansprüche, wobei das Wasser eine Temperatur von >0 bis 35°C aufweist oder zumindest 10°C kühler als die nach Mischen sich einstellende Temperatur des Gemisches ist, so dass die Abkühlung durch Zumischen des Wassers erfolgt oder von diesem unterstützt wird.

7. Verfahren nach zumindest einem der vorhergehenden Ansprüche, wobei das Gemisch bzw. die Dispersion 80 bis 30 Gew.% Wasser, vorzugsweise 65 bis 50 Gew.% Wasser enthält.

8. Verfahren nach zumindest einem der vorhergehenden Ansprüche, wobei zusätzlich ein Emulgator eingesetzt wird und der Emulgator vorzugsweise ein anionischer Emulgator ist.

9. Verfahren nach zumindest einem der vorhergehenden Ansprüche, wobei das zur Neutralisation eingesetzte Amin ausgewählt ist aus einem oder mehreren Mitgliedern der Gruppe N,N-Dimethylethanolamin (DMEA), N-Methyldiethanolamin, Triethanolamin, N,N-Dimethylisopropanolamin, N-Methyldiisopropanolamin, N-Methylmorpholin, N-Ethylmorpholin und Triethylamin und insbesondere N,N-Dimethylethanolamin (DMEA) oder 2-Amino-2-methyl-1-propanol (AMP),
wobei für den Fall, dass das Polymer A ein Polyurethan ist, das Amin ein tertiäres Amin ohne freie Hydroxygruppen ist, insbesondere N-Methylmorpholin, N-Ethylmorpholin und/oder Triethylamin ist.

10. Verfahren nach zumindest einem der vorhergehenden Ansprüche, wobei die Dispersion einen mittleren Teilchen- oder Tröpfchen-Durchmesser von 10 bis 250 nm, vorzugsweise 30 bis 150 nm aufweist.

11. Verfahren nach zumindest einem der vorhergehenden Ansprüche, wobei die Melamin-Verbindung das Umsetzungsprodukt von Formaldehyd mit Melamin ist.

12. Verfahren nach Anspruch 1 oder 11, wobei die Melamin-Verbindungen im Mittel mit mindestens 1 Mol, vorzugsweise mindestens 1,4 Mol Formaldehyd pro Mol primärer Aminogruppen am Aminotriazinkern methyloliert sind und diese Methylolgruppen ihrerseits im Mittel mit mindestens 0,5 Mol, vorzugsweise mindestens 0,8 Mol und besonders bevorzugt mit mindestens 0,7 Mol primären Alkoholen pro Mol Methylolgruppe verethert sind.

13. Verfahren nach Anspruch 1, wobei das Polymer A aus zumindest einem Mitglied der folgenden Gruppe ausgewählt ist:
a1) das Polymer ist ein alkalisch eingestelltes Polyurethan;
a2) das Polymer ist ein Alkydharz und das Alkydharz ist durch Kondensation von zumindest mehrwertigen Alkoholen mit zumindest mehrwertigen Säuren unter Zusatz von Fettsäuren erhältlich;
a3) das Polymer ist ein Polyester, der freie Carboxyl-Gruppen aufweist und vorzugsweise zusätzlich freie Hydroxy-Gruppen.

14. Verfahren nach Anspruch 1, wobei das Polymer A ein alkalisch eingestelltes Polyurethan ist und das Polyurethan ein Umsetzungsprodukt von zumindest einem Alkohol A mit mindestens zwei Hydroxylgruppen und zumindest einem Isocyanat A aufweisend zumindest zwei Isocyanatgruppen ist, wobei ggf. 0 bis 20 % der Hydroxylgruppen des Alkohols/der Alkohole A durch primäre oder sekundäre Amingruppen ersetzt sind,
wobei, wenn das NCO / OH+NH -Verhältnis größer 1 beträgt, das isocyanatterminierte Präpolymer A mit Aminen mit entweder mindestens zwei Amingruppen oder einer Amingruppe und zumindest einer Hydroxylgruppe umgesetzt wird.

15. Verfahren nach Anspruch 14, wobei weiterhin Alkohol B umgesetzt wird und Alkohol B mindestens zwei Hydroxylgruppen und entweder mindestens eine Carboxylgruppe oder mindestens eine Sulfonsäuregruppe aufweist oder deren Salze, wobei sich Alkohol B von Alkohol A und ggf. Alkohol C unterscheidet und ggf. 0 bis 20 % der Hydroxylgruppen des Alkohols/der Alkohole B durch primäre oder sekundäre Amingruppen ersetzt sind, wobei der Alkohol B vorzugsweise Dimethylolpropionsäure (DMPA) ist.

16. Verfahren nach einem der Ansprüche 14 oder 15, wobei weiterhin Alkohol C umgesetzt wird und Alkohol C drei und mehr Hydroxylgruppen aufweist, wobei sich Alkohol C von Alkohol A und ggf. Alkohol B unterscheidet und ggf. 0 bis 20 % der Hydroxylgruppen des Alkohols/der Alkohole C durch primäre oder sekundäre Amingruppen ersetzt sind.

17. Wässrige Polymer/Melamin-Dispersion erhältlich nach einem Verfahren der vorhergehenden Ansprüche, wobei die Tröpfchen in der Dispersion einen mittleren Teilchendurchmesser von 10 bis 250 nm bestimmt mittels Lichtstreuung aufweisen und wobei das neutralisierte Polymer A und das Umsetzungsprodukt B in homogener Verteilung in jedem Tröpfchen vorliegen und die Emulsion einen pH-Wert größer 7,5 aufweist.

18. Verfahren zur Aufbringung der wässrigen Polymer/Melamin-Dispersion nach Anspruch 17 auf eine Oberfläche, Entziehen von Wasser der aufgebrachten Polymer/Melamin-Dispersion unter Erhalt eines Klebstoffs, in Kontakt bringen der Oberfläche mit einer zweiten Oberfläche im Bereich des Klebstoffs und Erwärmen des Klebstoffs über eine Umsetzungstemperatur des Umsetzungsprodukts B mit dem Polymer A zur Ausbildung einer Vernetzung, wobei die Umsetzungstemperatur größer 80°C ist.

19. Verfahren nach Anspruch 18 weiterhin umfassend eine Nachhärtung unter weiterem Erwärmen, vorzugsweise über 140°C, und Austreiben von Aminen zum Freisetzen von gegenüber dem Umsetzungsprodukt B reaktiven Carboxylgruppen.

20. Verfahren nach Anspruch 18 oder 19, wobei die eine Oberfläche ein Kunststoff ist, auch in Folien-, Gewebe- oder Vlies-Form, und vorzugsweise die zweite Oberfläche Pulver oder Fasern sind, und diese weiter bevorzugt elektrostatisch aufgebracht werden.

21. Verfahren nach Anspruch 18 oder 19, wobei das Erwärmen erfolgt durch Aussetzen der Oberflächen und/oder des Klebstoffs mit IR-Bestrahlung.

22. Verfahren zur Aufbringung der wässrigen Polymer/Melamin-Dispersion nach Anspruch 17 auf eine Oberfläche, Entziehen von Wasser der aufgebrachten Polymer/Melamin-Dispersion unter Erhalt einer Beschichtung und Erwärmen der Beschichtung über eine Umsetzungstemperatur des Umsetzungsprodukts B mit dem Polymer A zur Ausbildung einer Vernetzung, wobei die Umsetzungstemperatur größer 80°C ist.

## Claims

1. Process for the preparation of an aqueous polymer/melamine dispersion comprising the steps of
(a) providing an at least partially neutralised polymer A containing free carboxylic acid groups, including salts thereof, having a weight average molecular weight greater than 500 g/mol selected from one or more members of the group:
(a1) at least partially neutralised polyurethanes,
(a2) at least partially neutralised alkyd resins, and
(a3) at least partially neutralised polyester;
(b) providing melamine compounds as reaction products B, the reaction products optionally being at least partially etherified with short-chain monoalcohols having 1 to 4 carbon atoms, including their condensation products of on average greater than 1 to 3 units, the melamine compounds used being the reaction products of formaldehyde with melamine, benzoguanamine, acetoguanamine and/or bisguanamines and the melamine compounds being methylolated on average with at least 1 mol of formaldehyde per mol of primary amino groups on the aminotriazine nucleus;
(c) bringing together at least the at least partially neutralised polymer A, the reaction product B and water, optionally in the presence of an emulsifier, with mixing to obtain an emulsion having a pH greater than 7.5,
wherein the reaction product B contains no water or at most up to 20% by weight of water, and
the at least partially neutralised polymer A contains less than 5% by weight of water,
the at least partially neutralised polymer A and the reaction product B are mixed at a temperature of 40 to 95°C and are then introduced together into water to produce a dispersion with water as disperse phase or water is then added to the mixture,
the emulsion being kept at a temperature of greater than 80°C for less than 1 hour,
the dispersion containing 20 to less than 50% by weight of the reaction product B and greater than 50% by weight to 80% by weight of the polymer A, based on the solids content.

2. The process according to claim 1, wherein the at least partially neutralised polymer A is essentially anhydrous with less than 2 wt.% water, preferably less than 0.5 wt.%.

3. Process according to claim 1 or 2, wherein an amine, preferably an alkanolamine, is added to the polymer for (partial) neutralisation, and the partial neutralisation neutralises greater than 50%, particularly preferably greater than 70%, of all acid groups, wherein, if the polymer A is a partially neutralised polyurethane, tertiary amines without free hydroxy groups are used.

4. Process according to at least one of the preceding claims, wherein the at least partially neutralised polymer A is subjected to mixing starting from a temperature of greater than 80°C and a temperature of the mixture below 80°C is established by the mixing within 30 min at the latest.

5. Process according to claim 1 or 4, wherein the elevated temperature of the polymer A is the temperature directly resulting from the production of the polymer A, optionally after cooling.

6. Process according to at least one of the preceding claims, wherein the water has a temperature of >0 to 35°C or is at least 10°C cooler than the temperature of the mixture after mixing, so that the cooling takes place by admixing the water or is supported by it.

7. Process according to at least one of the preceding claims wherein the mixture or dispersion contains 80 to 30 wt.% water, preferably 65 to 50 wt.% water.

8. Process according to at least one of the preceding claims, wherein an emulsifier is additionally used and the emulsifier is preferably an anionic emulsifier.

9. Process according to at least one of the preceding claims, wherein the amine used for neutralisation is selected from one or more members of the group consisting of N,N-dimethylethanolamine (DMEA), N-methyldiethanolamine, triethanolamine, N,N-dimethylisopropanolamine, N-methyldiisopropanolamine, N-methylmorpholine, N-ethylmorpholine and triethylamine and in particular N,N-dimethylethanolamine (DMEA) or 2-amino-2-methyl-1-propanol (AMP),
wherein, in the case that the polymer A is a polyurethane, the amine is a tertiary amine without free hydroxy groups, in particular N-methylmorpholine, N-ethylmorpholine and/or triethylamine.

10. Method according to at least one of the preceding claims, wherein the dispersion has an average particle or droplet diameter of 10 to 250 nm, preferably 30 to 150 nm.

11. Process according to at least one of the preceding claims, wherein the melamine compound is the reaction product of formaldehyde with melamine.

12. Process according to claim 1 or 11, wherein the melamine compounds are methylolated on average with at least 1 mol, preferably at least 1.4 mol, of formaldehyde per mol of primary amino groups on the aminotriazine core and these methylol groups are in turn etherified on average with at least 0.5 mol, preferably at least 0.8 mol and particularly preferably with at least 0.7 mol of primary alcohols per mol of methylol group.

13. Method of claim 1, wherein the polymer A is selected from at least one member of the following group:
a1) the polymer is an alkaline polyurethane;
a2) the polymer is an alkyd resin and the alkyd resin is obtainable by condensation of at least polyhydric alcohols with at least polyhydric acids with addition of fatty acids;
a3) the polymer is a polyester having free carboxyl groups and preferably additionally free hydroxy groups.

14. Process according to claim 1, wherein the polymer A is an alkaline adjusted polyurethane and the polyurethane is a reaction product of at least one alcohol A having at least two hydroxyl groups and at least one isocyanate A having at least two isocyanate groups, wherein optionally 0 to 20% of the hydroxyl groups of the alcohol(s) A are replaced by primary or secondary amine groups,
wherein, when the NCO / OH+NH ratio is greater than 1, the isocyanate-terminated prepolymer A is reacted with amines having either at least two amine groups or one amine group and at least one hydroxyl group.

15. Process according to claim 14, wherein alcohol B is further reacted and alcohol B has at least two hydroxyl groups and either at least one carboxyl group or at least one sulfonic acid group or salts thereof, wherein alcohol B differs from alcohol A and optionally alcohol C and optionally 0 to 20% of the hydroxyl groups of the alcohol(s) B are replaced by primary or secondary amine groups, wherein the alcohol B preferably contains dimethylol-propionic acid (DMPA).

16. Method of any one of claims 14 or 15, further wherein alcohol C is reacted and alcohol C has three or more hydroxyl groups, wherein alcohol C is different from alcohol A and optionally alcohol B and optionally 0 to 20% of the hydroxyl groups of the alcohol(s) C are replaced by primary or secondary amine groups.

17. An aqueous polymer/melamine dispersion obtainable by a process of the preceding claims, wherein the droplets in the dispersion have an average particle diameter of from 10 to 250 nm as determined by light scattering and wherein the neutralised polymer A and the reaction product B are present in homogeneous distribution in each droplet and the emulsion has a pH greater than 7.5.

18. Method of applying the aqueous polymer/melamine dispersion of claim 17 to a surface, removing water from the applied polymer/melamine dispersion to form an adhesive, contacting the surface with a second surface in the region of the adhesive, and heating the adhesive above a reaction temperature of the reaction product B with the polymer A to form a crosslink, wherein the reaction temperature is greater than 80°C.

19. Method of claim 18, further comprising post-curing with further heating, preferably above 140°C, and expulsion of amines to release carboxyl groups reactive with reaction product B.

20. Method according to claim 18 or 19, wherein one surface is a plastic, also in film, fabric or non-woven form, and preferably the second surface is powder or fibres, and these are further preferably applied electrostatically.

21. Method according to claim 18 or 19, wherein the heating is performed by exposing the surfaces and/or the adhesive to IR irradiation.

22. Method of applying the aqueous polymer/melamine dispersion of claim 17 to a surface, removing water from the applied polymer/melamine dispersion to obtain a coating, and heating the coating above a reaction temperature of the reaction product B with the polymer A to form a crosslink, wherein the reaction temperature is greater than 80°C.

## Revendications

1. Procédé de fabrication d'une dispersion aqueuse de polymère/mélamine, comprenant les étapes :
(a) préparation d'un polymère A au moins partiellement neutralisé, contenant des groupes acide carboxylique libres, y compris ses sels, ayant une masse moléculaire de plus de 500 g/mole en moyenne en poids, choisi parmi un ou plusieurs membres du groupe :
(a1) polyuréthanes au moins partiellement neutralisés ;
(a2) résines alkydes au moins partiellement neutralisées ; et
(a3) polyesters au moins partiellement neutralisés ;
(b) préparation de composés de mélamine comme produits de réaction B, lesdits produits de réaction étant le cas échéant encore au moins partiellement éthérifiés par des monoalcools à chaîne courte ayant 1 à 4 atomes de carbone, y compris leurs produits de condensation d'en moyenne plus de 1 à 3 unités, où, comme composés de mélamine sont utilisés les produits de réaction du formaldéhyde avec la mélamine, la benzoguanamine, l'acétoguanamine et/ou les bisguanamines, et où les composés de mélamine sont méthylolés sur le noyau aminotriazine en moyenne avec au moins 1 mole de formaldéhyde par mole de groupes amino primaires ;
(c) mise en contact au moins du polymère A au moins partiellement neutralisé, du produit de réaction B et d'eau, le cas échéant en présence d'un émulsifiant, en mélangeant pour obtenir une émulsion ayant un pH de plus de 7,5,
le produit de réaction B ne contenant pas d'eau ou au maximum jusqu'à 20 % en poids d'eau, et
le polymère A au moins partiellement neutralisé contenant moins de 5% en poids d'eau,
le polymère A au moins partiellement neutralisé et le produit de réaction B étant mélangés à une température de 40 à 95°C, puis
étant introduits ensemble dans de l'eau comme phase dispersée pour l'obtention d'une dispersion avec de l'eau, ou de l'eau étant ensuite ajoutée au mélange, l'émulsion étant maintenue à une température de plus de 80°C pendant moins d'1 heure,
la dispersion contenant 20 à moins de 50% en poids du produit de réaction B et plus de 50% en poids à 80% en poids du polymère A, par rapport à la teneur en matières solides.

2. Procédé selon la revendication 1, dans lequel le polymère A au moins partiellement neutralisé est sensiblement anhydre avec moins de 2% en poids d'eau, de préférence moins de 0,5% en poids.

3. Procédé selon l'une des revendications 1 ou 2, dans lequel une amine, de préférence une alcanolamine, est ajoutée au polymère pour la neutralisation (partielle), et la neutralisation partielle neutralise plus de 50 %, de façon particulièrement préférée plus de 70 %, de tous les groupes acide, où, si le polymère A est un polyuréthane partiellement neutralisé, des amines tertiaires sans groupes hydroxy libres sont utilisées.

4. Procédé selon au moins l'une des revendications précédentes, dans lequel le polymère A au moins partiellement neutralisé est soumis au mélange à partir d'une température de plus de 80°C et, par le mélange, une température du mélange inférieure à 80°C au plus tard dans les 30 minutes s'établit.

5. Procédé selon l'une des revendications 1 ou 4, dans lequel la température élevée du polymère A est la température résultante directement lors de la fabrication du polymère A, le cas échéant après un refroidissement.

6. Procédé selon au moins l'une des revendications précédentes, dans lequel l'eau présente une température de >0 à 35°C ou est plus basse d'au moins 10°C que la température du mélange se produisant après mélange, de telle sorte que le refroidissement s'effectue par mélange de l'eau ou est assisté par celui-ci.

7. Procédé selon au moins l'une des revendications précédentes, dans lequel le mélange ou la dispersion contient de 80 à 30% en poids d'eau, de préférence de 65 à 50% en poids d'eau.

8. Procédé selon au moins l'une des revendications précédentes, dans lequel on utilise en outre un émulsifiant et l'émulsifiant est, de préférence, un émulsifiant anionique.

9. Procédé selon au moins l'une des revendications précédentes, dans lequel l'amine utilisée pour la neutralisation est choisie parmi un ou plusieurs membres du groupe constitué par la N,N-diméthyléthanolamine (DMEA), la N-méthyldiéthanolamine, la triéthanolamine, la N,N-diméthylisopropanolamine, la N-méthyldiisopropanolamine, la N-méthylmorpholine, la N-éthylmorpholine et la triéthylamine, et, en particulier, la N,N-diméthyléthanolamine (DMEA) ou le 2-amino-2-méthyl-1-propanol (AMP),
où, dans le cas où le polymère A est un polyuréthane, l'amine est une amine tertiaire sans groupes hydroxy libres, en particulier la N-méthylmorpholine, la N-éthylmorpholine et/ou la triéthylamine.

10. Procédé selon au moins l'une des revendications précédentes, dans lequel la dispersion présente un diamètre moyen de particule ou de gouttelette de 10 à 250 nm, de préférence de 30 à 150 nm.

11. Procédé selon au moins l'une des revendications précédentes, dans lequel le composé de mélamine est le produit de réaction du formaldéhyde avec la mélamine.

12. Procédé selon l'une des revendications 1 ou 11, dans lequel les composés de mélamine sont méthylolés sur le noyau aminotriazine en moyenne par au moins 1 mole, de préférence au moins 1,4 mole, de formaldéhyde par mole de groupes amino primaires et ces groupes méthylol sont pour leur part éthérifiés en moyenne par au moins 0,5 mole, de préférence au moins 0,8 mole et de manière particulièrement préférée par au moins 0,7 mole d'alcools primaires par mole de groupe méthylol.

13. Procédé selon la revendication 1, dans lequel le polymère A est choisi parmi au moins un membre du groupe suivant :
a1) le polymère est un polyuréthane alcalinisé ;
a2) le polymère est une résine alkyde et la résine alkyde peut être obtenue par condensation d'au moins des alcools polyvalents avec au moins des acides polyvalents avec addition d'acides gras ;
a3) le polymère est un polyester qui présente des groupes carboxyle libres et, de préférence, également des groupes hydroxy libres.

14. Procédé selon la revendication 1, dans lequel le polymère A est un polyuréthane alcalinisé et le polyuréthane est un produit de réaction d'au moins un alcool A ayant au moins deux groupes hydroxyle et d'au moins un isocyanate A présentant au moins deux groupes isocyanate, où le cas échéant 0 à 20% des groupes hydroxyle de l'alcool/des alcools A sont remplacés par des groupes amine primaires ou secondaires,
où, lorsque le rapport NCO / OH+NH est supérieur à 1, le prépolymère A à terminaison isocyanate est mis à réagir avec des amines ayant soit au moins deux groupes amine, soit un groupe amine et au moins un groupe hydroxyle.

15. Procédé selon la revendication 14, dans lequel un alcool B est en outre mis à réagir et l'alcool B présente au moins deux groupes hydroxyle et soit au moins un groupe carboxyle, soit au moins un groupe acide sulfonique, ou leurs sels, où l'alcool B diffère de l'alcool A et le cas échéant de l'alcool C et le cas échéant 0 à 20% *des* groupes hydroxyle de l'alcool/des alcools B sont remplacés par des groupes amine primaires ou secondaires, l'alcool B étant de préférence l'acide diméthylolpropionique (DMPA).

16. Procédé selon l'une des revendications 14 ou 15, dans lequel on fait réagir en outre un alcool C et l'alcool C présente trois groupes hydroxyle ou plus, l'alcool C étant différent de l'alcool A et le cas échéant de l'alcool B et le cas échéant 0 à 20% des groupes hydroxyle de l'alcool/des alcools C étant remplacés par des groupes amine primaires ou secondaires.

17. Dispersion aqueuse de polymère/mélamine pouvant être obtenue par un procédé selon les revendications précédentes, dans laquelle les gouttelettes dans la dispersion présentent un diamètre moyen de particule de 10 à 250 nm tel que déterminé par diffusion de la lumière, et dans laquelle le polymère neutralisé A et le produit de réaction B sont présents en distribution homogène dans chaque gouttelette et l'émulsion a une valeur de pH supérieure à 7,5.

18. Procédé d'application de la dispersion aqueuse de polymère/mélamine selon la revendication 17 sur une surface, de retrait d'eau de la dispersion de polymère/mélamine appliquée pour obtenir un adhésif, de mise en contact de la surface avec une seconde surface dans la région de l'adhésif, et de chauffage de l'adhésif au-dessus d'une température de réaction du produit de réaction B avec le polymère A pour former une réticulation, la température de réaction étant supérieure à 80°C.

19. Procédé de la revendication 18 comportant en outre un post-durcissement avec un chauffage supplémentaire, de préférence au-dessus de 140°C, et une élimination d'amines pour la libération de groupes carboxyle capables de réagir vis-à-vis du produit de réaction B.

20. Procédé selon l'une des revendications 18 ou 19, dans lequel la première surface est une matière plastique, également sous forme de film, de tissu ou de non-tissé, et de préférence la seconde surface est une poudre ou des fibres, et celles-ci sont en outre de préférence appliquées électrostatiquement,

21. Procédé selon l'une des revendications 18 ou 19, dans lequel le chauffage a lieu par exposition des surfaces et/ou de l'adhésif à un rayonnement IR.

22. Procédé d'application de la dispersion aqueuse de polymère/mélamine selon la revendication 17 sur une surface, de retrait d'eau de la dispersion de polymère/mélamine appliquée pour obtenir un revêtement, et de chauffage du revêtement au-dessus d'une température de réaction du produit de réaction B avec le polymère A pour former une réticulation, la température de réaction étant supérieure à 80°C.
